# EUROPÄISCHE PATENTSCHRIFT

(11) **EP 4 015 330 B1**
(45) Veröffentlichungstag und Bekanntmachung des Hinweises auf die Patenterteilung: **23.08.2023**
(21) Anmeldenummer: 21207351.4
(22) Anmeldetag: 10.11.2021
(51) Int. Cl.: B60W 30/095, B60W 50/14, B60W 50/16, B60W 50/08

(54) **ASSISTENZSYSTEM UND VERFAHREN ZUR VERMEIDUNG VON FALSCHAUSLÖSUNGEN EINER BANKETTFUNKTION**
ASSISTANCE SYSTEM AND METHOD FOR AVOIDING FALSE TRIGGERING OF A HARD SHOULDER FUNCTION
SYSTÈME D'AIDE ET PROCÉDÉ PERMETTANT D'ÉVITER DES DÉCLENCHEMENT PAR ERREUR D'UNE FONCTION ACCOTEMENT

(30) Priorität: 15.12.2020 DE 102020215962
(43) Veröffentlichungstag der Anmeldung: 22.06.2022
(73) Patentinhaber: VOLKSWAGEN AG, 38440 Wolfsburg (DE)
(72) Erfinder: Bartels, Arne, 38448 Wolfsburg (DE); Klingemann, Timo, 38524 Sassenburg (DE); Kolms, Thomas, 38553 Wasbüttel (DE)

(56) Entgegenhaltungen:
- EP-A1- 3 738 852
- DE-A1-102007 029 909
- DE-A1-102012 109 310

## Beschreibung

Die Erfindung betrifft ein Verfahren zum Betreiben eines Assistenzsystems eines Kraftfahrzeugs zum Bereitstellen einer Bankettfunktion, wobei zumindest unter der ersten Bedingung, dass mittels zumindest einer Erfassungseinrichtung eine Bankettfahrt des Kraftfahrzeugs auf einem Straßenbankett gemäß zumindest einem vorbestimmten ersten Kriterium erfasst wird, und unter der zweiten Bedingung, dass ein gemäß einem zweiten Kriterium bestimmtes Lenkverhalten eines Fahrers des Kraftfahrzeugs erfasst wird, eine Bankettfunktion ausgeführt wird, gemäß welcher ein automatischer Fahreingriff durchgeführt wird. Die Erfindung betrifft auch ein Assistenzsystem für ein Kraftfahrzeug zum Bereitstellen einer Bankettfunktion.

Das Bankett ist der unbefestigte Seitenstreifen neben der Fahrbahn. Dort befinden sich zum Beispiel Sand, Splitt, Gras oder Ähnliches. Gerät ein Kraftfahrzeug versehentlich von der Fahrbahn ab, so löst dies beim Fahrer üblicherweise ein Erschrecken aus, welcher daraufhin abrupt in Richtung Fahrbahn zurücklenkt. Oftmals führt dies bedingt durch die abrupte Reibwertänderung beim Übergang vom Bankett zur Fahrbahn zu einem Übersteuern des Kraftfahrzeugs. Die Bankettfunktion führt in einem solchen Fall einen automatischen Fahreingriff durch, um so Schleuderunfälle beim Rücklenken des Fahrers aus dem Bankett zu vermeiden. Üblicherweise wird diese Bankettfunktion ausgelöst, wenn einerseits gemäß einem ersten Kriterium die Bankettfahrt des Kraftfahrzeugs detektiert wird und zusätzlich gemäß einem zweiten Kriterium ein bestimmtes Lenkverhalten des Fahrers, zum Beispiel eine scharfe Lenkreaktion des Fahrers.

Die Bankettfahrt des Kraftfahrzeugs kann mit einer Kraftfahrzeugsensorik beziehungsweise im Allgemeinen mit zumindest einer Erfassungseinrichtung erfasst werden. Fehldetektionen sind damit nie auszuschließen. Entsprechend kann es prinzipiell vorkommen, dass der Fahrer eine scharfe Lenkreaktion durchführt und das Kraftfahrzeug fälschlicherweise eine Bankettfahrt des Kraftfahrzeugs detektiert. In einem solchen Fall würde üblicherweise ebenfalls die Bankettfunktion ausgelöst werden, was jedoch bei einer Fahrt auf normaler Fahrbahn und nicht im Bankett zu einem störenden oder irritierenden Fahreingriff und unter Umständen einer gefährlichen Fahrsituation führen kann, da hierbei dann ein unnötiger Fahreingriff durch das Kraftfahrzeug durchgeführt werden würde. Entsprechend wäre es wünschenswert, solche Falschauslösungen vermeiden zu können.

Die DE 10 2015 217 783 A1 beschreibt einen verbesserten Spurassistenten, der beim Verlassen einer Fahrspur eine Warnung an den Fahrer ausgibt. Dabei ist vorgesehen, dass das Ausgeben dieser Warnung unter bestimmten Umständen unterdrückt wird, insbesondere, wenn mit einer Eye-Tracking-Funktion erfasst wird, dass der Fahrer seinen Blick in die Richtung gelenkt hat, in der das Fahrzeug von der Fahrspur abkommt und ein möglicher Grund für das Abkommen von der Fahrspur ermittelt wurde. Ein solcher möglicher Grund kann eine bevorstehende Kollision mit einem auf der Fahrspur befindlichen Objekt darstellen. Allerdings lässt sich durch ein solches Verfahren keine Falschauslösung einer Bankettfunktion vermeiden, insbesondere kann hierdurch keine oben beschriebene Bankettfunktion bereitgestellt werden.

Weiterhin beschreibt die JP 2011-73530 A ein Verfahren, um ein Fahrzeug vom Abkommen von der Fahrbahn zu hindern oder um das Kraftfahrzeug vor einer Kollision mit einem Objekt zu bewahren. Dabei wird ein automatischer Fahreingriff durchgeführt, wenn ein bevorstehendes Abkommen von der Fahrbahn oder eine bevorstehende Kollision mit einem Objekt detektiert wurde, außer der Fahrer führt bereits selbst einen Lenkeingriff aus. Aber auch hierdurch können keine Falschauslösungen einer Bankettfunktion vermieden werden.

Darüber hinaus beschreibt die US 2020/0164871 A1 ein Verfahren für ein Spurwechselassistenzsystem, gemäß welchem der Fahrer eines Fahrzeugs bei einem beabsichtigten Spurwechsel gewarnt wird, wenn sich auf der Nachbarspur ein anderer Verkehrsteilnehmer befindet. Die Ausgabe dieser Warnung wird jedoch unterdrückt, wenn der Spurwechsel dabei auf eine abzweigende Fahrspur führt, wie zum Beispiel die Fahrspur einer Autobahnabfahrt, und sich der andere Verkehrsteilnehmer auf einer anderen Fahrspur befindet als dieser, auf die der Fahrer wechseln möchte. Doch auch hierdurch können keine Falschauslösungen einer Bankettfunktion vermieden werden.

Aufgabe der vorliegenden Erfindung ist es daher, ein Assistenzsystem und ein Verfahren bereitzustellen, die es ermöglichen, Falschauslösungen einer Bankettfunktion zumindest zu reduzieren.

Diese Aufgabe wird gelöst durch ein Verfahren und ein Assistenzsystem mit den Merkmalen gemäß den jeweiligen unabhängigen Patentansprüchen. Vorteilhafte Ausgestaltungen der Erfindung sind Gegenstand der abhängigen Patentansprüche, der Beschreibung sowie der Figuren.

Bei einem erfindungsgemäßen Verfahren zum Betreiben eines ersten Assistenzsystems eines Kraftfahrzeugs zum Bereitstellen einer Bankettfunktion wird zumindest unter der ersten Bedingung, dass mittels zumindest einer Erfassungseinrichtung eine Bankettfahrt des Kraftfahrzeugs auf einem Straßenbankett gemäß zumindest einem vorbestimmten ersten Kriterium erfasst wird, und unter der zweiten Bedingung, dass ein gemäß einem zweiten Kriterium bestimmtes Lenkverhalten eines Fahrers des Kraftfahrzeugs erfasst wird, eine Bankettfunktion ausgeführt, gemäß welcher ein automatischer Fahreingriff durchgeführt wird. Zumindest unter der dritten Bedingung, dass mittels der zumindest einen Erfassungseinrichtung ein dem Kraftfahrzeug in Fahrtrichtung vorausliegendes Hindernis gemäß einem vorgegebenen dritten Kriterium detektiert wird, wird ein die Ausführung der Bankettfunktion beeinflussendes Steuersignal ausgegeben. Dadurch kann zum Beispiel die Ausführung der Bankettfunktion verhindert oder modifiziert werden.

Die Erfindung beruht dabei auf folgender Erkenntnis: Fährt ein Fahrer mit seinem Kraftfahrzeug versehentlich in das Bankett, so folgt eine scharfe Lenkreaktion durch den Fahrer in Richtung Fahrbahn. Diese scharfe Lenkreaktion ist dadurch begründet, dass der Fahrer beim versehentlichen Fahren in das Bankett erschrickt und wieder zu der Fahrbahn zurückgelangen möchte. Mit anderen Worten stellt hierbei das unbeabsichtigte Fahren in das Bankett die Ursache für die scharfe Lenkreaktion dar. Fährt ein Fahrer mit seinem Fahrzeug dagegen nicht im Bankett und erfolgt dann eine scharfe Lenkreaktion, so kann diese nicht durch die Bankettfahrt des Kraftfahrzeugs begründet sein. Es muss also eine andere Ursache für diese scharfe Lenkreaktion vorliegen. Die häufigste Ursache, warum ein Fahrer, wenn dieser auf der Fahrbahn fährt, eine scharfe Lenkreaktion ausführt, ist, dass dieser einem vorausliegenden Hindernis ausweichen möchte. Diese Erkenntnis nutzt die Erfindung nun vorteilhafterweise dazu, um die Ausführung der Bankettfunktion zu modifizieren, vorzugsweise zu verhindern oder abzubrechen, wenn ein solches vorausliegendes Hindernis gemäß dem vorgegebenen dritten Kriterium detektiert wird. Wird nämlich gemäß dem zweiten Kriterium ein bestimmtes Lenkverhalten des Fahrers, insbesondere ein scharfes Lenkverhalten, detektiert und gleichzeitig ein vorausliegendes Hindernis erfasst, so ist es wahrscheinlich, dass der Fahrer dem Hindernis ausweichen, selbst wenn mittels der zumindest einen Erfassungseinrichtung gemäß dem ersten Kriterium eine Bankettfahrt detektiert wurde. Mit anderen Worten handelt es sich in dieser Situation aller Wahrscheinlichkeit nach um eine fälschlicherweise detektierte Bankettfahrt, und eine Falschauslösung der Bankettfunktion kann in dieser Situation vorteilhafterweise vermieden werden. Folglich lassen sich auch gefährliche Situationen, die durch die Falschauslösung der Bankettfunktion bedingt sein können, effizient vermeiden.

Wie eingangs definiert, stellt das Straßenbankett einen unbefestigten Seitenstreifen neben der Fahrbahn dar, insbesondere neben der Straße. Die zumindest eine Erfassungseinrichtung ist dabei dem Kraftfahrzeug zugeordnet und stellt damit also insbesondere eine Erfassungseinrichtung des Kraftfahrzeugs dar. Insbesondere kann darunter die Gesamtheit der Sensorik des Kraftfahrzeugs verstanden werden. Mit anderen Worten kann die Erfassungseinrichtung einen oder mehrere einzelne Sensoren aufweisen. Zur Erfassung der Bankettfahrt gemäß ersten Kriterium und zur Erfassung des bestimmten Lenkverhaltens des Fahrers gemäß dem zweiten Kriterium können dabei - insbesondere unterschiedliche - Sensoren der Erfassungseinrichtung des Kraftfahrzeugs verwendet werden. Auch das vorausliegende Hindernis kann gemäß dem vorgegebenen dritten Kriterium mittels der zumindest einen Erfassungseinrichtung des Kraftfahrzeugs detektiert werden. Dadurch kann ein gleicher oder auch ein anderer Sensor wie zur Erfassung der Bankettfahrt und/oder des Lenkverhaltens des Fahrers verwendet werden. Weiterhin impliziert die Tatsache, dass mittels der zumindest einen Erfassungseinrichtung eine Bankettfahrt des Kraftfahrzeugs auf einem Straßenbankett gemäß zumindest einem vorbestimmten ersten Kriterium erfasst wird, nicht, dass tatsächlich eine Bankettfahrt des Kraftfahrzeugs auf dem Straßenbankett vorliegt. Mit anderen Worten umfasst eine solche Erfassung auch fälschlicherweise erfasste Bankettfahrten. Weiterhin sollen die erste und zweite Bedingung als notwendige Bedingungen zum Ausführen der Bankettfunktion verstanden werden, aber nicht notwendigerweise als hinreichende Bedingungen. Insbesondere kann es sein, dass die Bankettfunktion nicht ausgeführt wird, selbst wenn die erste und zweite Bedingung erfüllt sind, zum Beispiel wenn auch die dritte Bedingung erfüllt ist.

Bei einer sehr vorteilhaften Ausgestaltung der Erfindung beeinflusst das die Ausführung der Bankettfunktion beeinflussende Steuersignal die Ausführung derart, dass die Ausführung verhindert oder abgebrochen wird oder dass der automatische Fahreingriff mit vorbestimmt reduzierter Intensität ausgeführt wird. Dadurch können mögliche Gefahren bedingt durch Falschauslösungen der Bankettfunktion vorteilhafterweise vermieden oder in ihrem Ausmaß zumindest reduziert werden. Dass der Fahreingriff dabei mit vorbestimmt reduzierter Intensität ausgeführt wird, soll dabei insbesondere so verstanden werden, dass die Intensität gegenüber einer für den automatischen Fahreingriff vorher festgelegten Intensitätswert reduziert ist. Wie nachfolgend beschrieben, wird der Fahreingriff vorzugsweise als Bremseingriff durchgeführt. Für einen solchen Bremseingriff kann zum Festlegen von dessen Intensität ein entsprechender Bremsdruck, z.B. 40 bar oder 50 bar oder 60 bar vorgegeben werden, zum Beispiels auch abhängig davon, ob der Fahrer in der aktuellen Situation bremst oder nicht. Bremst der Fahrer aktuell, so kann ein höherer vorgegebenen Bremsdruck gewählt werden, da sich bei einem zusätzlichen Bremsen des Fahrers die Gefahr für ein Schleudern zusätzlich erhöht ist. Sind also beispielsweise die erste und die zweite Bedingung erfüllt, so kann zum Beispiel der Bremsdruck für den Fahreingriff, z.B. situationsabhängig, vorgegeben werden. Wird daraufhin erfasst, dass auch die dritte Bedingung erfüllt ist, so kann, wenn zum Beispiel der Bremseingriff im Zuge der Ausführung der Bankettfunktion schon im Gange ist, dieser vorab festgelegte Bremsdruck reduziert werden und die Bankettfunktion mit dem reduzierten Bremsdruck weitergeführt werden. Bevorzugt ist es jedoch, dass es gar nicht erst zur Ausführung der Bankettfunktion kommt, wenn die dritte Bedingung erfüllt ist oder, wenn die Bankettfunktion bereits im Gange ist, diese in ihrer Ausführung unterbrochen wird. Hierdurch lässt sich die Sicherheit maximieren.

Bei einer weiteren vorteilhaften Ausgestaltung der Erfindung wird der automatische Fahreingriff in Form einer automatischen radselektiven Bremsung durchgeführt, bei welcher die dem Bankett nähergelegenen Räder des Kraftfahrzeugs mit einer bestimmten Bremskraft beaufschlagt werden. Eine solche Bremskraft kann durch einen vorgegebenen Bremsdruck erzeugt werden. Hierdurch kann vorteilhafterweise ein Übersteuern und potentielles Schleudern des Fahrzeugs verhindert werden, wenn der Fahrer bei einer Bankettfahrt eine scharfe Lenkreaktion in Richtung der Fahrbahn ausführt. Insbesondere können dabei alle Räder mit einer Bremskraft beaufschlagt werden, die auf derjenigen Seite der Fahrzeuglängsachse befinden, die dem Bankett näher gelegen ist. Insbesondere stellen dies die Räder dar, die aktuell im Bankett fahren. Fahren diese Räder bedingt durch die scharfe Lenkreaktion des Fahrers wieder zurück auf die Fahrbahn, so findet ein abrupter Reibungszahlwechsel diese Räder betreffend statt. Fahren die Räder im Bankett, so ist hier der Reibwert deutlich geringer als wenn die Räder auf einer befestigten Fahrbahn fahren. Um ein bei diesem Übergang resultierendes Übersteuern und Schleudern zu verhindern, können die Räder, die im Bankett fahren, vorteilhafterweise durch diese Ausgestaltung der Erfindung abgebremst werden, wodurch sowohl das Übersteuern als auch das potentielle Schleudern in den meisten Fällen effektiv verhindert werden können.

Weiterhin ist es vorteilhaft, wenn das vorbestimmte erste Kriterium, gemäß welchem die Bankettfahrt erfasst wird, umfasst, dass von Raddrehzahlsensoren jeweiliger Räder des Kraftfahrzeugs bereitgestellte Sensordaten einen charakteristischen zeitlichen Verlauf aufweisen, insbesondere derart, dass der zeitliche Verlauf der Sensordaten zumindest eines Rads auf einer ersten Seite des Kraftfahrzeugs bezogen auf eine Fahrzeuglängsachse stärker variiert als der zeitliche Verlauf zumindest eines Rads auf einer der erste Seite gegenüberliegenden zweiten Seite des Kraftfahrzeugs bezogen auf die Fahrzeuglängsachse. Fahren beispielsweise die linken Räder in Fahrtrichtung betrachtet auf einem glatten Untergrund, so ist auch der zeitliche Verlauf der von den Raddrehzahlsensoren bereitgestellten Sensordaten glatt. Fahren dagegen die rechten Räder im Bankett, das heißt auf einem unebenen Untergrund, so spiegelt sich dies in einem nicht glatten Verlauf der Sensordaten der Raddrehzahlsensoren dieser rechten Räder wider. Durch diese unterschiedlichen zeitlichen Verläufe der Sensordaten, die rechten und linken Räder betreffend, kann also darauf geschlossen werden, dass sich die rechten Räder im Bankett befinden. Um diese Schlussfolgerung zusätzlich abzusichern, ist es weiterhin bevorzugt, dass das vorbestimmte erste Kriterium, gemäß welchem die Bankettfahrt erfasst wird, zusätzlich umfasst, dass die zumindest eine Erfassungseinrichtung eine vorbestimmte Relativposition des Kraftfahrzeugs bezüglich einer Fahrspurmarkierung und/oder einer Fahrbahnbegrenzung erfasst. Insbesondere kann die Erfassungseinrichtung beispielsweise eine Ableitung zur Fahrstreifenmarkierungslinie oder dem Fahrbahnrand erkennen, das heißt einen gewissen räumlichen seitlichen Versatz zu einer derartigen Begrenzung in einer Richtung weg von der Fahrbahn, und daraus schließen, ob zum Beispiel die rechten Räder schon im Bankett fahren. Grundsätzlich ist es auch denkbar, diese Relativposition des Kraftfahrzeugs bezüglich einer Fahrspurmarkierung oder Fahrbahnbegrenzung als alleiniges Kriterium zum Erfassen der Bankettfahrt vorzusehen. Gerade aber durch die Kombination mit der Erfassung der Raddrehzahlsensoren lässt sich eine Bankettfahrt relativ zuverlässig detektieren, so dass grundsätzlich die Wahrscheinlichkeit für Falschauslösungen gering ist.

Weiterhin kann das vorbestimmte zweite Kriterium, gemäß welchem das bestimmte Lenkverhalten eines Fahrers des Kraftfahrzeugs erfasst wird, umfassen, dass ein erfasster Lenkwinkel und/oder ein Lenkwinkelgradient größer ist als ein vorbestimmter Grenzwert. Dadurch lässt sich vorteilhafterweise eine scharfe Lenkreaktion des Fahrers charakterisieren. Auch höhere Ableitungen des Lenkwinkels können zu diesem Zweck betrachtet und ausgewertet werden. Ein weiteres Kriterium könnte zum Beispiel auch die Lenkrichtung des Fahrers darstellen. Eine Bankettfunktion wird beispielsweise nur dann ausgelöst, wenn der Fahrer auch eine solche Lenkreaktion in Richtung der Fahrbahn und nicht weg von der Fahrbahn durchführt. Bei leichten Lenkreaktionen des Fahrers dagegen ist im Kraftfahrzeug ein automatischer Fahreingriff notwendig, da in einem solchen Fall ein Übersteuern oder Schleudern ohnehin unwahrscheinlich ist.

Bei einer sehr vorteilhaften Ausgestaltung der Erfindung umfasst das vorgegebene dritte Kriterium, dass sich das dem Kraftfahrzeug in Fahrtrichtung vorausliegende Hindernis auf einer selben Fahrspur befindet wie das Kraftfahrzeug. Befindet sich das Hindernis dagegen auf einer anderen Fahrspur, so ist es unwahrscheinlich, dass ein Fahrer deswegen eine scharfe Lenkreaktion ausführen würde. Entsprechend lässt sich die Wahrscheinlichkeit dafür, dass das Auslösen oder Ausführen der Bankettfunktion fälschlicherweise verhindert wird, reduzieren.

Gemäß einer weiteren vorteilhaften Ausgestaltung der Erfindung umfasst das vorgegebene dritte Kriterium, dass eine ermittelte prognostizierte Zeit bis zur Kollision mit dem erfassten Hindernis einen vorgebbaren Wert unterschreitet. Eine solche prognostizierte Zeit bis zur Kollision mit dem erfassten Hindernis lässt sich beispielsweise auf Basis eines Abstands des Kraftfahrzeugs zum Hindernis sowie auf Basis einer Relativgeschwindigkeit zwischen dem Hindernis und dem Kraftfahrzeug ermitteln. Eine solche Prognose basiert dabei zudem auf einer prognostizierten Fahrtrajektorie des Kraftfahrzeugs, basierend auf aktuellen Fahrparametern, wie Geschwindigkeit, Lenkwinkel und Orientierung des Kraftfahrzeugs zur Fahrbahn. Ist die Zeit bis zur Kollision mit dem Hindernis noch sehr lang, so ist es ebenso unwahrscheinlich, dass ein Fahrer deswegen eine scharfe Lenkreaktion ausführen würde, um dem Hindernis auszuweichen. Führt ein Fahrer also eine scharfe Lenkreaktion in einer solchen Situation aus, so ist ebenso unwahrscheinlich, dass dies durch das vorausliegende Hindernis begründet ist, und die Bankettfunktion kann dennoch ausgeführt werden. In gleicher Weise wie zuvor beschrieben, wird durch diese vorteilhafte Ausführung der Erfindung ebenso ein fälschlicherweises Unterdrücken der Ausführung oder Auslösung der Bankettfunktion verhindert.

Bei einer weiteren vorteilhaften Ausgestaltung der Erfindung weist das Kraftfahrzeug ein vom ersten verschiedenes zweites Assistenzsystem auf, welches ein Kollisionsvermeidungssystem darstellt, welches dazu ausgelegt ist, das dem Kraftfahrzeug vorausliegende Hindernis gemäß dem vorgegebenen dritten Kriterium zu detektieren, wobei für den Fall, dass das Kollisionsvermeidungssystem das Hindernis detektiert, das die Ausführung der Bankettfunktion beeinflussende Steuersignal ausgegeben wird. Mit anderen Worten müssen die für die Hinderniserfassung durchgeführte Objektdetektion und Erkennung nicht vom ersten Assistenzsystem zur Bereitstellung der Bankettfunktion selbst ausgeführt werden, sondern es können vorteilhafterweise die Ergebnisse eines weiteren zweiten Assistenzsystems, nämlich eines Kollisionsvermeidungssystems, verwendet werden. Damit lassen sich enorm Kosten einsparen und die Zusatzfunktion zur Vermeidung von Falschauslösungen der Bankettfunktion auf besonders einfache und effiziente Weise umsetzen. Ein Kollisionsvermeidungssystem ist dazu ausgelegt, dem Kraftfahrzeug vorausliegende Hindernisse, insbesondere auf der gleichen Fahrspur, zu detektieren und für den Fall, dass eine Kollision droht, entsprechende Maßnahmen, wie zum Beispiel eine Warnung oder einen Bremseingriff, auszuführen. Die die Detektion des Hindernisses betreffenden Ergebnisse eines solchen Systems können also vorteilhafterweise dem ersten Assistenzsystem zur Verfügung gestellt werden.

Ein solches Kollisionsvermeidungssystem kann dabei ebenfalls die zumindest eine Erfassungseinrichtung, insbesondere zur Umfelderfassung, nutzen, um mögliche Hindernisse auf der vorausliegenden Fahrspur des Kraftfahrzeugs zu erfassen. Im Allgemeinen kann die zumindest eine Erfassungseinrichtung beliebig ausgebildete Sensoren nutzen, wie zum Beispiel eine Kamera und/oder einen Radar und/oder einen Lasersensor, inbesondere Lidar (Light Detection and Ranging) und/oder einen Ultraschallsensor. Auch mehrere dieser Sensoren verschiedenen oder gleichen Typs können von der zumindest einen Erfassungseinrichtung umfasst sein. Auch die oben beschriebenen Raddrehzahlsensoren sollen als Teil der zumindest einen Erfassungseinrichtung des Kraftfahrzeugs aufgefasst werden. Das Kollisionsvermeidungssystem kann unter anderem auch die Daten von einem oder mehreren Umfeldsensoren, insbesondere den eben genannten Umfeldsensoren Kamera, Radar, Laser und Ultraschall, fusionieren und diese fusionierten Daten hinsichtlich einer Kollisionsgefahr, zum Beispiel basierend auf der oben definierten prognostizierten Zeit bis zur Kollision, bewerten. Im einfachsten Fall kann zum Beispiel ein Radar zur Erfassung von Hindernissen genutzt werden. Das Kollisionsvermeidungssystem kann wiederum auf Ergebnisse anderer Assistenzsysteme des Kraftfahrzeugs zurückgreifen. Beispielsweise kann das Kollisionsvermeidungssystem zur Erkennung der Fahrbahn beziehungsweise der Fahrbahnrandmarkierung und/oder des Fahrbahnrands, insbesondere zur Identifizierung der aktuell vom Kraftfahrzeug befahrenen Fahrspur, die Daten des meist kamerabasierten Spurverlassenswarners verwenden. Mit anderen Worten kann das Kraftfahrzeug ebenfalls ein weiteres Assistenzsystem, nämlich den genannten Spurverlassenswarner, umfassen, welcher dazu ausgelegt ist, die aktuelle Fahrspur des Kraftfahrzeugs zu ermitteln und bei Verlassen dieser Fahrspur, insbesondere ohne Aktivierung eines Fahrtrichtungsanzeigers durch den Fahrer, eine Warnmeldung auszugeben. Die von diesem Spurverlassenswarner identifizierte aktuelle Fahrspur kann dazu genutzt werden, um zu ermitteln, ob ein vom Kollisionsvermeidungssystem erfasstes Hindernis auf dieser aktuellen Fahrspur liegt oder nicht. Durch die Vernetzung verschiedener Assistenzsysteme lassen sich vorteilhaft Aufgaben teilen und Ergebnisse unterschiedlicher Assistenzsysteme auch gegenseitig nutzen, was die Ausführung und Implementierung dieser Assistenzsysteme besonders kosteneffizient und effektiv gestaltet. Auch lassen sich hierdurch die Rechenzeiten enorm verkürzen, dass Rechenergebnisse gemeinsam genutzt werden können und nicht jedes Assistenzsystem entsprechende Rechenschritte selbst durchführen muss.

Dabei ist weiterhin vorteilhaft, wenn das Kollisionsvermeidungssystem abhängig von der ermittelten prognostizierten Zeit bis zur Kollision verschiedene Warnstufen aufweist, wobei das die Ausführung der Bankettfunktion beeinflussende Steuersignal ausgegeben wird, sobald zumindest eine bestimmte der verschiedenen Warnstufen durch das Kollisionsvermeidungssystem aktiviert wird oder irgendeine der verschiedenen Warnstufen. Die dritte Bedingung kann also bereits einfach dann als erfüllt gelten, wenn das Kollisionsvermeidungssystem zumindest eine bestimmte oder irgendeine seiner verschiedenen Warnstufen aktiviert. Bei Aktivierung einer solchen Warnstufe kann gleichzeitig ein entsprechendes Signal vom Kollisionsvermeidungssystem an das erste Fahrerassistenzsystem übermittelt werden, welches daraufhin die Aktivierung der Bankettfunktion verhindert oder, falls diese bereits im Gange ist, abbricht.

Besonders vorteilhaft ist es dabei, wenn das Kollisionsvermeidungssystem zum Beispiel drei verschiedene Warnstufen aufweist. Wenn eine Kollision droht, zum Beispiel wenn die ermittelte prognostizierte Zeit bis zur Kollision einen bestimmten Grenzwert unterschreitet, welcher vorzugsweise kleiner ist als 10 Sekunden, besonders bevorzugt kleiner als 5 Sekunden, dann kann das Kollisionsvermeidungssystem den Fahrer des Kraftfahrzeugs in mehreren Stufen warnen, zum Beispiel in zwei Warnstufen: In der ersten Stufe kann eine optische und/oder akustische Warnung durch eine Anzeige im zentralen Kombiinstrument zusammen mit einem Warnton ausgegeben werden. Eine haptische Warnung, zum Beispiel durch Vibration des Lenkrads, ist ebenso möglich. Wenn der Fahrer hierauf nicht reagiert, dann erfolgt in einer zweiten Stufe, insbesondere wenn die Zeit bis zur Kollision weiter abnimmt, eine haptische Warnung durch einen Warnruck der Bremse. Wenn der Fahrer hierauf ebenfalls nicht reagiert und insbesondere, wenn die Zeit bis zur Kollision weiter abnimmt, dann leitet das Kollisionsvermeidungssystem als dritte Stufe eine Notbremsung ein. Die Bankettfunktion kann dabei abgebrochen oder deren Auslösung verhindert werden, sobald irgendeine dieser drei Stufen aktiv ist, oder erste, wenn die zweite oder dritte Stufe aktiv ist, aber nicht schon bei der ersten Stufe, oder die Bankettfunktion wird abgebrochen oder deren Auslösung verhindert, erst wenn die dritte Sture aktiv ist. Alternativ zum Abbruch oder Verhinderung ist auch hier wieder lediglich ein Reduzieren der Intensität des automatischen Fahreingriffs möglich.

Die erste Stufe kann zum Beispiel eingeleitet werden, wenn die Zeit bis zur Kollision drei Sekunden unterschreitet, die zweite Stufe, wenn die Zeit bis zur Kollision zwei Sekunden unterschreitet und die dritte Stufe, wenn die Zeit bis zur Kollision eine Sekunde unterschreitet.

Zur Auslösung der Warnstufe und der Notbremsung werden vom Kollisionsvermeidungssystem Signale auf einem Fahrzeugdatenbus zu anderen Komponenten im Fahrzeug gesendet, wie zum Beispiel zum Kombiinstrument oder einem Bremsregelsystem (ESC). Die Bankettfunktion beziehungsweise das erste Assistenzsystem kann vorteilhafterweise ebenfalls den Fahrzeugdatenbus abhören. Falls eine der Warnstufen oder gar eine Notbremsung angefordert wird, dann schaltet sich auch die Bankettfunktion automatisch passiv beziehungsweise unterbricht einen laufenden Eingriff. Ob die Bankettfunktion bereits bei einer der Warnstufen passiv geschaltet wird oder erst bei Auslösen der Notbremsung, kann zudem in der Bankettfunktion, das heißt im ersten Assistenzsystem, einstellbar beziehungsweise parametrierbar sein.

Bei einer weiteren vorteilhaften Ausgestaltung der Erfindung weist das Kraftfahrzeug ein drittes Assistenzsystem auf, welches ein rechnergestützes Umfeldmodell in Abhängigkeit von durch die zumindest eine Erfassungseinrichtung bereitgestellten Sensordaten, in Abhängigkeit von Positionsdaten des Kraftfahrzeugs, in Abhängigkeit von einer gespeicherten digitalen Straßenkarte und insbesondere in Abhängigkeit von zumindest einer über eine Car-to-X-Kommunikation bereitgestellten Information erstellt, wobei das Hindernis gemäß dem dritten Kriterium in Abhängigkeit von dem rechnergestützten Umfeldmodell detektiert wird. Auf diese Weise kann also die Interpretation, warum der Fahrer eine scharfe Lenkreaktion durchführt, von der Bankettfunktion mit Hilfe eines rechnergestützten Umfeldmodells erfolgen.

Rechnergestützte Umfeldmodelle werden zukünftig zum Beispiel für hochautomatisierte Fahrfunktionen zum Einsatz kommen. Sie speisen sich unter anderem aus den Signalen einer Vielzahl von Umfeldsensoren, digitalen Straßenkarten und Positionsdaten insb. durch satellitengestützte Positionierungssysteme wie GPS und/oder durch Koppelortung, sowie aus einer Car-to-Infrastructure-, Car-to-Server- und Car-to-Car-Kommunikation, d.h. eine Kommunikation des Kraftfahrzeugs mit einer Infrastruktur, z.B. eine Ampel, mit einem Internetserver und mit einem anderen Kraftfahrzeug, bzw. den aus dieser Kommunikation erhaltenen Informationen. Dieses Umfeldmodell beinhaltet zum Beispiel Fahrbahnen, Fahrstreifen, die Position des Kraftfahrzeugs auf der Fahrbahn, die Position anderer Fahrzeuge und Verkehrsteilnehmer auf der Fahrbahn, die Position von Hindernissen auf der Fahrbahn und am Fahrbahnrand, die Position von Leitplanken und Verkehrszeichen, Informationen über Gefahrenstellen, zum Beispiel Positionen von Unfällen oder Stauenden, Strecken mit Glatteis oder Aquaplaning und so weiter. Wenn zum Beispiel ein Hindernis erkannt wird und sich dieses auf dem Fahrstreifen des Kraftfahrzeugs befindet, dann ist eine scharfe Lenkreaktion des Fahrers sehr wahrscheinlich auf einer Ausweichreaktion des Fahrers begründet. Die Bankettfunktion würde auch in diesem Fall vorteilhafterweise passiv geschaltet werden. Wenn das Hindernis aber neben der Fahrbahn steht, dann kann eine scharfe Lenkreaktion des Fahrers nicht durch eine solche Ausweichreaktion vor dem Hindernis begründet sein. Entsprechend wird in einem solchen Fall auch die Bankettfunktion ausgeführt. Weist das Kraftfahrzeug also ein solches rechnergestütztes Umfeldmodell auf, so lässt sich dies ebenso vorteilhafterweise und effizient zur Vermeidung von Falschauslösungen der Bankettfunktion nutzen, insbesondere zur Detektion von Hindernissen auf der gleichen Fahrspur. Auch hierbei muss also das erste Assistenzsystem nicht selbst zur Detektion von Objekten ausgebildet sein, und es kann auch hierbei wiederum auf die Ergebnisse anderer Systeme zurückgegriffen werden.

Des Weiteren betrifft die Erfindung auch ein Assistenzsystem für ein Kraftfahrzeug, das eingerichtet ist zum Bereitstellen einer Bankettfunktion, wobei das Assistenzsystem zumindest eine Erfassungseinrichtung aufweist, die dazu ausgelegt ist, eine Bankettfahrt des Kraftfahrzeugs auf einem Straßenbankett gemäß zumindest einem vorbestimmten ersten Kriterium zu erfassen und gemäß einem zweiten Kriterium ein bestimmtes Lenkverhalten eines Fahrers des Kraftfahrzeugs zu erfassen, wobei das Assistenzsystem eine Steuereinrichtung aufweist, die dazu ausgelegt ist, zumindest unter der ersten Bedingung, dass mittels der zumindest einen Erfassungseinrichtung eine Bankettfahrt des Kraftfahrzeugs gemäß dem zumindest einen vorbestimmten ersten Kriterium erfasst wurde, und unter der zweiten Bedingung, dass das bestimmte Lenkverhalten des Fahrers des Kraftfahrzeugs gemäß dem zweiten Kriterium erfasst wurde, eine Ausführung einer Bankettfunktion auszulösen, gemäß welcher ein automatischer Fahreingriff durchgeführt wird. Dabei ist die Steuereinrichtung dazu ausgelegt, zumindest unter der dritten Bedingung, dass mittels der zumindest einen Erfassungseinrichtung ein dem Kraftfahrzeug in Fahrtrichtung vorausliegendes Hindernis gemäß einem vorgegebenen dritten Kriterium detektiert wird, ein die Ausführung der Bankettfunktion beeinflussendes Steuersignal auszugeben.

Die für das erfindungsgemäße Verfahren und seine Ausgestaltung genannten Vorteile gelten in gleicher Weise für das erfindungsgemäße Assistenzsystem. Zu der Erfindung gehören auch Weiterbildungen des erfindungsgemäßen Assistenzsystems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Assistenzsystems hier nicht noch einmal beschrieben.

Darüber hinaus soll auch ein Kraftfahrzeug mit einem solchen Assistenzsystem, insbesondere gemäß Weiterbildungen mit einem oder mehreren der im Zusammenhang mit dem erfindungsgemäßen Verfahren und seinen Ausführungsformen beschriebenen verschiedenen Assistenzsystemen, als zur Erfindung gehörend angesehen werden.

Im Folgenden werden Ausführungsbeispiele der Erfindung beschrieben. Hierzu zeigt:
- Fig. 1: eine schematische Draufsicht auf ein Kraftfahrzeug mit einem Assistenzsystem zum Bereitstellen einer Bankettfunktion gemäß einem Ausführungsbeispiel der Erfindung;
- Fig. 2: eine schematische Darstellung eines Kraftfahrzeugs mit einem Assistenzsystem zum Bereitstellen einer Bankettfunktion und dessen Verknüpfung mit einem Kollisionsvermeidungssystem des Kraftfahrzeugs gemäß einem weiteren Ausführungsbeispiel der Erfindung;
- Fig. 3: eine schematische Darstellung eines Kraftfahrzeugs mit einem Assistenzsystem zum Bereitstellen einer Bankettfunktion und dessen Verknüpfung mit einem rechnergestützten Umfeldmodell gemäß einem weiteren Ausführungsbeispiel der Erfindung; und
- Fig. 4: ein Ablaufdiagramm zur Veranschaulichung eines Verfahrens zum Betreiben eines Assistenzsystems zum Bereitstellen einer Bankettfunktion gemäß einem weiteren Ausführungsbeispiel der Erfindung.

Bei den im Folgenden erläuterten Ausführungsbeispielen handelt es sich um bevorzugte

Ausführungsbeispiele der Erfindung.

In den Figuren sind funktionsgleiche Elemente jeweils mit denselben Bezugszeichen versehen.

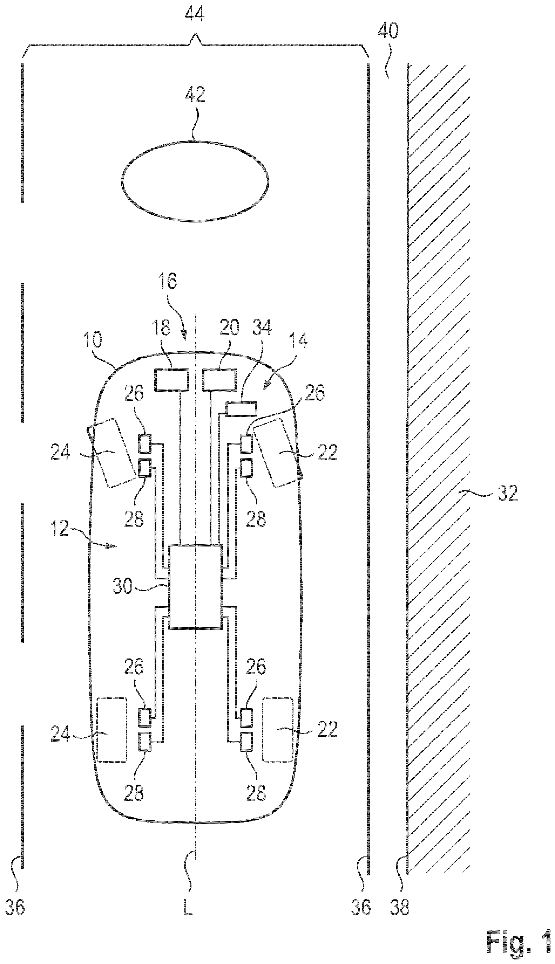

Fig. 1 zeigt eine schematische Draufsicht auf ein Kraftfahrzeug 10 mit einem Assistenzsystem 12 zum Bereitstellen einer Bankettfunktion gemäß einem Ausführungsbeispiel der Erfindung. Das Kraftfahrzeug 10, insbesondere das Assistenzsystem 12, weist dabei eine Erfassungseinrichtung 14 auf, welche eine oder mehrere Sensoren umfassen kann. Im folgenden Beispiel umfasst die Erfassungseinrichtung 14 zum einen Umfeldsensoren 16, welche in diesem Beispiel als eine Kamera 18 sowie ein Radar 20 ausgebildet sind. Weitere oder alternative Umfeldsensoren können beispielsweise auch ein Laser, zum Beispiel ein Lidarsensor oder ein Ultraschallsensor darstellen. Zudem kann das Kraftfahrzeug 10, wie nachfolgend noch beschrieben, auch weitere Assistenzsysteme aufweisen, die diese Erfassungseinrichtung 14, insbesondere die Umfeldsensoren 16, ebenso nutzen können. Mit anderen Worten kann das Assistenzsystem 12 zur Bereitstellung der Bankettfunktion die genannte Umfeldsensorik 16 mit anderen Assistenzsystemen teilen. Darüber hinaus weist das Kraftfahrzeug 10 in diesem Beispiel vier Räder 22, 24 auf, wobei zwei der Räder 22 sich rechts von einer Fahrzeuglängsachse L befinden, insbesondere in Fahrtrichtung des Kraftfahrzeugs 10 bei einer Vorwärtsfahrt des Kraftfahrzeugs betrachtet, und die anderen beiden Räder 24 sich links von der Fahrzeuglängsachse L befinden. Jedem dieser Räder 22 ist zudem ein Raddrehzahlsensor 26 zugeordnet sowie ein Aktor 28 zum Beaufschlagen der betreffenden Räder 22 mit einer Bremskraft beziehungsweise einem Bremsdruck.

Das Assistenzsystem weist weiterhin eine Steuereinrichtung 30 auf. Diese Steuereinrichtung 30 ist dazu ausgelegt, die Bankettfunktion auszuführen und zu diesem Zweck einen automatischen Fahreingriff durchzuführen, welcher darin besteht, die dem Bankett 32 näher gelegenen Räder 22 des Kraftfahrzeugs 10 im Falle einer detektierten Bankettfahrt des Kraftfahrzeugs 10 und im Falle eines detektierten bestimmten Lenkverhaltens des Fahrers abzubremsen. Um ein solches Lenkverhalten, insbesondere eine scharfe Lenkreaktion des Fahrers, zu detektieren, umfasst das Assistenzsystem 12 weiterhin einen Lenkwinkelsensor 34, welcher zur Erfassung eines Lenkwinkels und/oder Lenkgradienten oder höherer zeitlicher Ableitungen des Lenkwinkels ausgebildet ist. Um eine Bankettfahrt zu detektieren, das heißt zu detektieren, wenn Räder 22 des Kraftfahrzeugs 10 im Bankett 32 fahren, werden vorzugsweise die zeitlichen Verläufe der Sensordaten, die von den jeweiligen Raddrehzahlsensoren 26 der jeweiligen Räder 22, 24 bereitgestellt werden, ausgewertet. Auch werden die Sensordaten der Umfeldsensoren 16 ausgewertet. Insbesondere ist Steuereinrichtung 30 dazu ausgelegt, mit Hilfe der Umfeldsensoren 16 und den Fahrwerksensoren, insbesondere den Raddrehzahlsensoren 26, zu erkennen, ob eine Bankettfahrt vorliegt. Zum Beispiel kann die nach vorn gerichtete Kamera 18 die Ableitung, das heißt den seitlichen Versatz, zu Fahrstreifenmarkierungslinien 36 oder dem Fahrbahnrand 38 erkennen und darauf schließen, ob zum Beispiel die rechten Räder 22 schon im Bankett 32, das heißt dem unbefestigten Untergrund neben der Fahrbahn 40 fahren. Aus dem zeitlichen Verlauf der Raddrehzahlsensoren 26 kann auf die Rauigkeit des Untergrunds geschlossen werden: Wenn der zeitliche Verlauf zum Beispiel der linken Räder 24 glatt ist und der rechten Räder 22 nicht glatt ist, dann fahren die rechten Räder 22 im Bankett 32. Wenn gleichzeitig eine scharfe Lenkreaktion des Fahrers, basierend auf der Erfassung des Lenkwinkelsensors 34 beobachtet wird, um das Bankett 32 zu verlassen, dann löst die durch das Assistenzsystem 12 ausgeführte Bankettfunktion eine radselektive Bremsung an den Rädern 22 durch Ansteuerung der zugehörigen Aktoren 28 aus, welche im Bankett 32 fahren. Hierdurch wird ein Übersteuern und ein potentielles Schleudern des Fahrzeugs 10 verhindert.

Bei herkömmlichen Systemen zur Ausführung einer Bankettfunktion können Falschauslösungen auftreten. Eine Falschauslösung der Bankettfunktion bedeutet, dass, obwohl das Fahrzeug 10 mit allen Rädern 22, 24 auf der Fahrbahn 40 fährt, die Bankettfunktion trotzdem fälschlicherweise auslöst. Eine Falschauslösung der Bankettfunktion ist für den Fahrer störend oder irritierend und daher unerwünscht. Auch ist sie potentiell gefährlich, wenn das Fahrzeug hierdurch den Fahrstreifen verlassen würde. Eine Falschauslösung der Bankettfunktion könnte dann erfolgen, wenn Umfeldsensoren 16 und Fahrwerksensoren 26 fälschlicherweise eine Bankettfahrt erkennen und der Fahrer gleichzeitig eine starke Lenkbewegung durchführt, zum Beispiel um einem Hindernis 42 auszuweichen. Konkret fährt das Fahrzeug 10 zum Beispiel auf einer Straße 40 mit rauem Untergrund, wie zum Beispiel Kopfsteinpflaster oder einem Wirtschaftsweg. Die Auswertung der Signale der Raddrehzahlsensoren 26 könnte dann eine Bankettfahrt indizieren. Gleichzeitig meldet die nach vorn gerichtete Kamera 18 fälschlicherweise das Überschreiten des Fahrbahnrandes 38, weil sie zum Beispiel einen Schattenwurf oder eine Radspur im Regen mit dem Fahrbahnrand 38 verwechselt. Gleichzeitig muss der Fahrer vor einem Hindernis 42, wie zum Beispiel einem Radfahren, Fußgänger, Fahrzeug und so weiter, ausweichen. Dies könnte bei herkömmlichen Systemen dann zu einer Falschauslösung der Bankettfunktion führen.

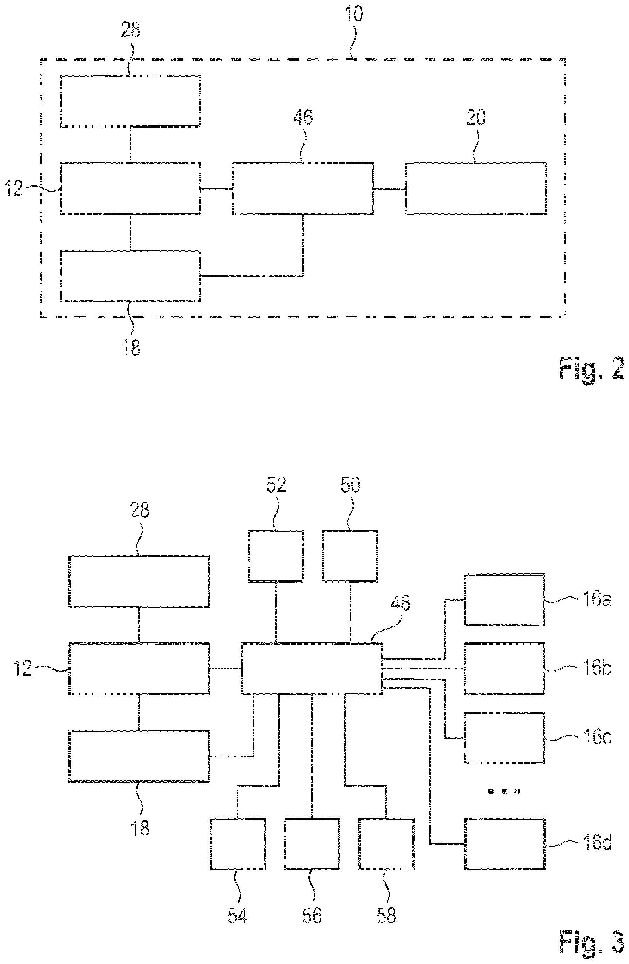

Die Erfindung und ihre Ausführungsformen ermöglichen es in vorteilhafter Weise, solche Falschauslösungen vorteilhafterweise zu vermeiden oder zumindest in ihrer Häufigkeit zu reduzieren. Dies lässt sich beispielsweise dadurch bewerkstelligen, dass die Bankettfunktion mit einer erweiterten Umfelderfassung zur Erkennung von Hindernissen 42 auf der Fahrbahn 40 zwecks Vermeidung von Falschauslösungen der Bankettfunktion verknüpft wird. Dabei kommen als Umfeldsensoren 16 nicht nur die Kamera 18 zur Erkennung des Fahrbahnrandes 38, sondern unter Umständen auch andere Sensoren, wie bereits beschrieben, zur Erkennung von Hindernissen 42 auf der Fahrbahn 40 zum Einsatz. Dabei beruht die Erfindung auf folgender Erkenntnis: Wenn der Fahrer scharf lenkt und gleichzeitig die erweiterte Umfelderfassung 16 ein Hindernis 42 vor dem Fahrzeug 10 erkennt, insbesondere auf der gleichen Fahrspur 44 wie das Kraftfahrzeug 10, dann wird die Bankettfunktion durch die Steuereinrichtung 30 passiv geschaltet oder, falls sie schon im Eingriff ist, abgeschaltet. Denn die scharfe Lenkbewegung des Fahrers dient in diesem Fall offensichtlich nicht dazu, das Bankett 32 zu verlassen, sondern dem Vermeiden einer Kollision mit diesem detektierten Hindernis 42 auf der Fahrbahn 40, welches sich unmittelbar vor dem Fahrzeug 10 befindet. So können alle Falschauslösungen der Bankettfunktion, welche durch eine scharfe Lenkbewegung des Fahrers zur Kollisionsvermeidung verursacht sind, vermieden werden. Im vorliegenden Beispiel kann ein solches Hindernis 42, welches sich auf der gleichen Fahrspur 44 wie das Kraftfahrzeug 10 befindet und insbesondere in sehr kurzem zeitlichen Abstand zum Fahrzeug 10 angeordnet ist, durch die genannten Umfeldsensoren 16, also zum Beispiel durch die Kamera 18 und/oder weitere Sensoren, wie zum Beispiel den Radar 20, erfasst werden. Die Erkennung dieses vorhandenen Hindernisses 42 kann dabei durch die Steuereinrichtung 30 ausgeführt werden. Erfasst diese basierend auf den Sensordaten der Umfeldsensoren 16 ein solches Hindernis 42 gemäß den genannten Kriterien, so unterbinden diese die Ausführung der Bankettfunktion oder unterbricht diese, falls diese schon ausgeführt wird. Die Erfassung dieses Hindernisses 42 kann aber auch von anderen Assistenzsystemen des Kraftfahrzeugs 10 übernommen werden, wenn solche Assistenzsysteme ohnehin im Kraftfahrzeug 10 vorhanden sind. Dadurch können vorhandene Ressourcen besonders effizient genutzt werden. Dies wird nun anhand von Fig. 2 und Fig. 3 beschrieben.

Fig. 2 zeigt dabei wiederum eine schematische Darstellung eines Kraftfahrzeugs 10 mit dem Assistenzsystem 12 zum Bereitstellen der Bankettfunktion sowie einem weiteren Assistenzsystem, nämlich einem Kollisionsvermeidungssystem 46. Im einfachsten Fall können zur Erkennung von Hindernissen 42 auf der Fahrbahn 40 ein oder mehrere nach vorn gerichtete Sensoren genutzt werden, wie zum Beispiel Kamera- 18, Radar- 20, Laser- oder Ultraschall-Sensoren. Deren Signale können zudem vorteilhafterweise miteinander fusioniert werden, um eine möglichst hohe Zuverlässigkeit und Integrität bei der Hinderniserkennung 42 zu gewährleisten.

Idealerweise muss die Bankettfunktion, das heißt das Assistenzsystem 12, dabei nicht selbst die Sensordaten fusionieren und bezüglich einer drohenden Kollision auswerten, sondern es können die Signale eines im Fahrzeug existierenden Kollisionsvermeidungssystems 46 genutzt werden. Dieses Kollisionsvermeidungssystem 46 kann dazu ausgelegt sein, die Daten von einem oder mehreren Umfeldsensoren 16 zu fusionieren und diese hinsichtlich einer Kollisionsgefahr mit einem vorausliegenden Hindernis 42 bewerten. Ein solches Hindernis kann wie beschrieben ein anderer Verkehrsteilnehmer sein, wie zum Beispiel ein Radfahrer, ein Fußgänger, ein anderes Fahrzeug und so weiter. Auch Gegenstände oder Tiere können solche Hindernisse darstellen. Im einfachsten Fall wird zum Beispiel ein Radar 20 zur Erfassung von Hindernissen 42 genutzt, wie dies in Fig. 2 illustriert ist. Die vom Radar 20 bereitgestellten Sensordaten werden vom Kollisionsvermeidungssystem 46 ausgewertet sowie auch die von der Kamera 18 bereitgestellten Sensordaten. Darauf basierend kann das Kollisionsvermeidungssystem 46 einerseits vorausliegende Hindernisse 42 detektieren sowie auf Basis der Kameradaten 18 zusätzlich zuordnen, ob sich ein solches Hindernis 42 auf der gleichen Fahrspur 44 wie das Kraftfahrzeug 10 befindet oder nicht. Das Kollisionsvermeidungssystem 46 kann zur Hinderniserkennung, insbesondere zur Erkennung der Fahrbahn 40 beziehungsweise der Fahrbahnrandmarkierung 36 oder des Fahrbahnrandes 38 auch die Daten eines weiteren, hier nicht explizit dargestellten Assistenzsystems, nämlich eines Spurverlassenswarners, der ebenfalls kamerabasiert arbeiten kann, nutzen. Die vom Radar 20 bereitgestellten Daten können zudem auch von anderen Assistenzsystemen, zum Beispiel einem ACC (Adaptive Cruise Control) genutzt werden.

Detektiert das Kollisionswarnsystem also ein Hindernis, so kann dies an das erste Assistenzsystem 12 zum Bereitstellen einer Bankettfunktion übermittelt werden, welche die Durchführung der Bankettfunktion verhindert oder abbricht.

Wenn eine Kollision droht, dann kann es vorgesehen sein, dass das Kollisionsvermeidungssystem 46, bevor es eine Notbremsung als dritte Stufe auslöst, zunächst eine Warnung an den Fahrer in zwei Stufen ausgibt. In der ersten Stufe kann eine optische und/oder akustische Warnung durch eine Anzeige am zentralen Kombiinstrument zusammen mit einem Warnton ausgegeben werden. Wenn der Fahrer hierauf nicht reagiert, dann kann in einer zweiten Stufe eine haptische Warnung durch einen Warnruck der Bremse des Kraftfahrzeugs 10 automatisch ausgeführt werden. Wenn der Fahrer hierauf ebenfalls nicht reagiert, dann leitet das Kollisionsvermeidungssystem 46 eine Notbremsung ein, zumindest wenn sich die Zeit bis zur Kollision unter einen kritischen Grenzwert verringert hat. Zur Auslösung der Warnstufen und der Notbremsung werden vom Kollisionsvermeidungssystem 46 Signale auf einem Fahrzeugdatenbus zu anderen Komponenten im Kraftfahrzeug 10 gesendet, an welchen auch das erste Assistenzsystem 12 angeschlossen ist, so dass dieses diese Information über ein detektiertes Hindernis 42 ebenfalls empfängt. Die Bankettfunktion kann darauf basierend also vorteilhafterweise die Auslösung der Bankettfunktion verhindern oder die Ausführung der Bankettfunktion abschalten. Dabei kann es vorgesehen sein, dass eine derartige Unterbrechung beziehungsweise Modifikation der Auslösung der Bankettfunktion erst bei oben definierter dritter Warnstufe, zweiter Warnstufe oder bereits ab der ersten Warnstufe des Kollisionsvermeidungssystems 46 ausgeführt wird. Auf diese Weise lässt sich die Bankettfunktion hinsichtlich möglicher Falschauslösungen deutlich verbessern, wodurch eine solche Verbesserung zudem auf besonders effiziente Weise ausgeführt werden kann, da hierfür andere Assistenzsysteme des Kraftfahrzeugs 10, die ohnehin vorhanden sind, effizient genutzt werden können.

Im komplexesten Fall kann die Interpretation, warum der Fahrer eine scharfe Lenkreaktion durchführt, von der Bankettfunktion mit Hilfe eines rechnergestützten Umfeldmodells erfolgen. Dies wird nun anhand von Fig. 3 erläutert. Ein solches Umfeldmodell ist hierbei mit 48 bezeichnet. Rechnergestützte Umfeldmodelle 48 werden zukünftig zum Beispiel für hochautomatisierte Fahrfunktionen genutzt. Sie speisen sich unter anderem aus den Signalen einer Vielzahl von Umfeldsensoren 16a, 16b, 16c, 16d, die zusätzlich zur vorhandenen Frontkamera genutzt werden können. Zusätzlich werden zur Erstellung dieses Umfeldmodells 48 eine digitale Straßenkarte 50, GPS-Positionsdaten 52, die durch einen GPS-Empfänger des Kraftfahrzeugs 10 bereitgestellt werden, sowie Informationen aus einer Kommunikation mit fahrzeugexternen Einrichtungen genutzt. Derartige fahrzeugexterne Einrichtungen stellen zusätzlich Infrastrukturkomponenten, Internet-Server oder andere Fahrzeuge dar. Entsprechend sind diese allgemein als Car-to-X-Kommunikationen bezeichneten Kommunikationen im Speziellen mit Car-to-Infrastructure-Kommunikation 54, Car-to-Server-Kommunikation 56 und Car-to-Car-Kommunikation 58 bezeichnet. Mit anderen Worten kann das Umfeldmodell 48 basierend auf Informationen erstellt werden, die von anderen Kraftfahrzeugen, kraftfahrzeugexternen Infrastrukturkomponenten oder Internet-Servern bezogen werden können. Ein solches Umfeldmodell 48 beinhaltet entsprechende Informationen zu Fahrbahnen 40, Fahrstreifen 44, die aktuelle Position des eigenen Ego-Fahrzeugs 10 auf der Fahrbahn 40, die Position anderer Fahrzeuge auf der Fahrbahn 40, die Position von Hindernissen 42 auf der Fahrbahn 40 und am Fahrbahnrand 38, die Position von Leitplanken und Verkehrszeichen, Informationen über Gefahrenstellen und so weiter. Wenn zum Beispiel ein Hindernis 42, basierend auf diesem Umfeldmodell 48 erkannt wird und sich dieses auf dem Fahrstreifen 44 beziehungsweise der Fahrspur 44 des Kraftfahrzeugs 10 befindet, dann ist eine scharfe Lenkreaktion des Fahrers sehr wahrscheinlich in einer Ausweichreaktion des Fahrers begründet. Die Bankettfunktion wird also durch das Assistenzsystem 12, insbesondere durch die Steuereinrichtung 30, passiv geschaltet. Wenn das Hindernis aber neben der Fahrbahn 40 steht, dann kann eine scharfe Lenkreaktion des Fahrers nicht durch eine Ausweichreaktion vor diesem Hindernis begründet sein. Die Bankettfunktion wird entsprechend weiter ausgeführt.

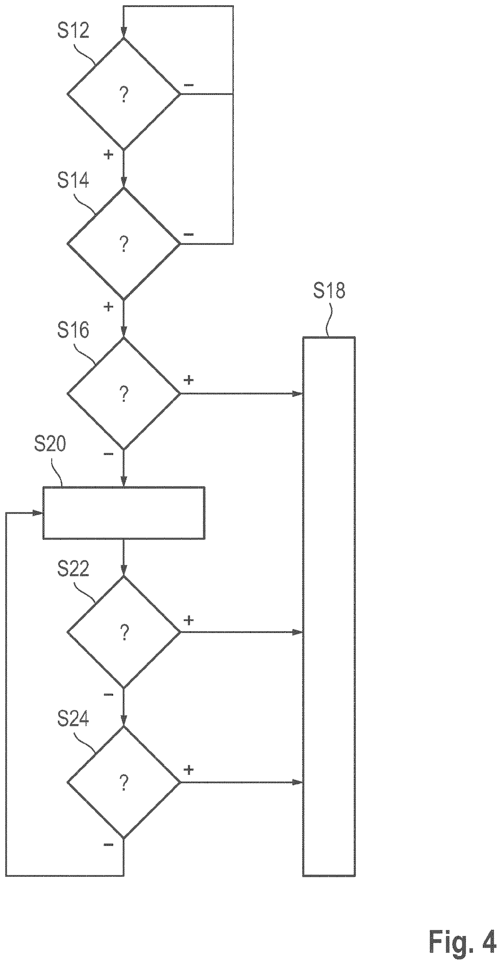

Fig. 4 zeigt ein Ablaufdiagramm zur Veranschaulichung eines Verfahrens zum Bereitstellen einer Bankettfunktion gemäß einem weiteren Ausführungsbeispiel der Erfindung. Das Verfahren beginnt hierbei in Schritt S12, in welchem überprüft wird, ob gemäß einem ersten Kriterium eine Bankettfahrt des Kraftfahrzeugs 10 detektiert wurde. Ist dies nicht der Fall, so beginnt das Verfahren von vorne bis letztendlich in Schritt S12 eine Bankettfahrt des Kraftfahrzeugs 10 detektiert wurde. Dabei muss es sich nicht notwendigerweise um eine tatsächliche Bankettfahrt handeln. Diese Detektion kann unter Umständen auch auf einer Fehldetektion der Bankettfahrt basieren. Weiterhin wird in Schritt S14 überprüft, ob auch ein bestimmtes Lenkverhalten, insbesondere eine starke Lenkreaktion zurück zur Fahrbahn detektiert wird. Ist dies nicht der Fall, so beginnt das Verfahren auch hier wieder von vorne in Schritt S12. Wird zusätzlich ebenfalls ein solches bestimmtes Lenkverhalten des Fahrers in S14 detektiert, so wird zu Schritt S16 übergegangen, in welchem überprüft wird, ob ein dem Kraftfahrzeug vorausliegendes Hindernis detektiert wurde, welches sich auf der gleichen Fahrspur wie das Kraftfahrzeug 10 befindet. Ist dies der Fall, so wird in Schritt S18 die Ausführung der Bankettfunktion unterbrochen beziehungsweise die Bankettfunktion erst gar nicht ausgelöst, und das Verfahren ist beendet. Wird dagegen in Schritt S16 kein solches Hindernis detektiert, so wird zu Schritt S20 übergegangen und die Bankettfunktion ausgelöst. Insbesondere wird hierbei ein radselektiver Bremseingriff durchgeführt. Im Anschluss daran, das heißt nach diesem Auslösen der Bankettfunktion in Schritt S20, kann wiederum in Schritt S22 überprüft werden, ob nunmehr ein Hindernis auf der gleichen Fahrspur des Kraftfahrzeugs 10 detektiert wurde. Ist dies nunmehr der Fall, so kann wiederum in Schritt S18 die Ausführung der Bankettfunktion unterbrochen werden. Andernfalls wird zu Schritt S24 übergegangen und überprüft, ob ein weiteres Beendigungskriterium zum Beenden der Bankettfunktion erfüllt ist. Dieses kann zum Beispiel darin bestehen, dass das Kraftfahrzeug 10 bereits das Bankett 32 verlassen hat und/oder kein starker Lenkeinschlag durch den Fahrer zu verzeichnen ist oder Ähnliches. Ein solches Beendigungskriterium kann auch ein zeitliches Kriterium sein, zum Beispiel kann es vorgesehen sein, dass der Bremseingriff nur für eine vorbestimmte Zeitdauer ausgeführt wird. Ist diese Zeitdauer abgelaufen oder ein anderes Beendigungskriterium erfüllt, so wird auch hierzu Schritt S18 übergegangen, in welchem die Ausführung der Bankettfunktion beendet wird. Ist dieses Beendigungskriterium nicht erfüllt, so wird die Bankettfunktion weiter ausgeführt und wieder zu Schritt S20 übergegangen. Diese Abfolge wird also solange wiederholt, bis entweder in Schritt S22 ein Objekt unmittelbar dem Kraftfahrzeug vorausliegend detektiert wurde oder ein Beendigungskriterium zum Beenden der Bankettfunktion erfüllt ist.

Insgesamt zeigen die Beispiele, wie durch die Erfindung eine Vorrichtung und ein Verfahren zur Vermeidung von Falschauslösungen einer Bankettfunktion bereitgestellt werden können, die es durch die Verknüpfung der Bankettfunktion mit einer erweiterten Umfelderfassung ermöglichen zu erkennen, wenn ein Fahrer aus einem anderen Grund als den, ein Bankett verlassen zu wollen, eine scharfe Lenkreaktion ausführt, nämlich aus dem Grund, einem unmittelbar vorausliegenden Hindernis auszuweichen, mit welchem der Fahrer eine Kollision vermeiden möchte. Hierdurch lassen sich ein den Fahrer störender oder irritierender Fahreingriff vermeiden und potentielle, daraus resultierende Gefahren eliminieren.

### Bezugszeichenliste

| | | | |
|---|---|---|---|
| 10 | Kraftfahrzeug | 42 | Hindernis |
| 12 | Assistenzsystem | 44 | Fahrspur |
| 14 | Erfassungseinrichtung | 46 | Kollisionsvermeidungssystem |
| 16 | Umfeldsensoren | 48 | Umfeldmodell |
| 16a | Umfeldsensoren | 50 | Straßenkarte |
| 16b | Umfeldsensoren | 52 | GPS-Positionsdaten |
| 16c | Umfeldsensoren | 54 | Car-to-Infrastructure-Kommunikation |
| 16d | Umfeldsensoren | | |
| 18 | Kamera | 56 | Car-to-Server-Kommunikation |
| 20 | Radar | 58 | Car-to-Car-Kommunikation |
| 22 | Räder | | |
| 24 | Räder | L | Fahrzeuglängsachse |
| 26 | Raddrehzahlsensor | | |
| 28 | Aktor | S10 | Schritt |
| 30 | Steuereinrichtung | S12 | Schritt |
| 32 | Bankett | S14 | Schritt |
| 34 | Lenkwinkelsensor | S16 | Schritt |
| 36 | Fahrstreifenmarkierungslinien | S18 | Schritt |
| 38 | Fahrbahnrand | S20 | Schritt |
| 40 | Fahrbahn | S22 | Schritt |
| | | S24 | Schritt |

## Patentansprüche

1. Verfahren zum Betreiben eines ersten Assistenzsystems (12) eines Kraftfahrzeugs (10) zum Bereitstellen einer Bankettfunktion, wobei zumindest unter der ersten Bedingung, dass mittels zumindest einer Erfassungseinrichtung (14) eine Bankettfahrt des Kraftfahrzeugs (10) auf einem Straßenbankett (32) gemäß zumindest einem vorbestimmten ersten Kriterium erfasst wird und unter der zweiten Bedingung, dass ein gemäß einem zweiten Kriterium bestimmtes Lenkverhalten eines Fahrers des Kraftfahrzeugs (10) erfasst wird, eine Bankettfunktion ausgeführt wird, gemäß welcher ein automatischer Fahreingriff durchgeführt wird,
**dadurch gekennzeichnet, dass**
zumindest unter der dritten Bedingung, dass mittels der zumindest einen Erfassungseinrichtung (14) ein dem Kraftfahrzeug (10) in Fahrtrichtung vorausliegendes Hindernis (42) gemäß einem vorgegebenen dritten Kriterium detektiert wird, ein die Ausführung der Bankettfunktion beeinflussendes Steuersignal ausgegeben wird.

2. Verfahren nach Anspruch 1,
**dadurch gekennzeichnet, dass**
das die Ausführung der Bankettfunktion beeinflussendes Steuersignal die Ausführung derart beeinflusst, dass die Ausführung verhindert wird oder abgebrochen wird oder dass der automatische Fahreingriff mit vorbestimmt reduzierter Intensität ausgeführt wird.

3. Verfahren nach einem der vorhergehenden Ansprüchen
**dadurch gekennzeichnet, dass**
der automatische Fahreingriff in Form einer automatischen radselektiven Bremsung durchgeführt wird, bei welcher die dem Straßenbankett (32) näher gelegenen Räder (22, 24) des Kraftfahrzeugs (10) mit einer bestimmten Bremskraft beaufschlagt werden.

4. Verfahren nach einem der vorhergehenden Ansprüchen,
**dadurch gekennzeichnet, dass**
das vorbestimmte erste Kriterium, gemäß welchem die Bankettfahrt erfasst wird, umfasst, dass von Raddrehzahlsensoren (26) jeweiliger Räder (22, 24) des Kraftfahrzeugs (10) bereitgestellte Sensordaten einen charakteristischen zeitlichen Verlauf aufweisen, insbesondere derart, dass der zeitliche Verlauf der Sensordaten zumindest eines Rads (22, 24) auf einer ersten Seite des Kraftfahrzeugs (10) bezogen auf eine Fahrzeuglängsachse (L) stärker variiert als der zeitliche Verlauf zumindest eines Rads (24, 22) auf einer der erste Seite gegenüberliegenden zweiten Seite des Kraftfahrzeugs (10) bezogen auf die Fahrzeuglängsachse (L), und/oder wobei das vorbestimmte erste Kriterium, gemäß welchem die Bankettfahrt erfasst wird, umfasst, dass die zumindest eine Erfassungseinrichtung (14) eine vorbestimmte Relativposition des Kraftfahrzeugs (10) bezüglich einer Fahrspurmarkierung (36) und/oder einer Fahrbahnbegrenzung (38) erfasst, und/oder wobei das vorbestimmte zweite Kriterium, gemäß welchem das bestimmte Lenkverhalten eines Fahrers des Kraftfahrzeugs (10) erfasst wird, umfasst, dass ein erfasster Lenkwinkel und/oder ein Lenkwinkelgradient größer ist als ein vorbestimmter Grenzwert.

5. Verfahren nach einem der vorhergehenden Ansprüchen,
**dadurch gekennzeichnet, dass**
das vorgegebene dritte Kriterium umfasst, dass sich das dem Kraftfahrzeug (10) in Fahrtrichtung vorausliegende Hindernis (42) auf einer selben Fahrspur (44) befindet wie das Kraftfahrzeug (10).

6. Verfahren nach einem der vorhergehenden Ansprüchen,
**dadurch gekennzeichnet, dass**
das vorgegebene dritte Kriterium umfasst, dass eine ermittelte prognostizierte Zeit bis zur Kollision mit dem Hindernis (42) einen vorgebbaren Wert unterschreitet.

7. Verfahren nach einem der vorhergehenden Ansprüchen,
**dadurch gekennzeichnet, dass**
das Kraftfahrzeug (10) ein vom ersten verschiedenes zweites Assistenzsystem (42) aufweist, welches ein Kollisionsvermeidungssystem (42) darstellt, welches dazu ausgelegt ist, das dem Kraftfahrzeug (10) vorausliegende Hindernis (42) gemäß dem vorgegebenen dritten Kriterium zu detektieren, wobei für den Fall, dass das Kollisionsvermeidungssystem (42) das Hindernis (42) detektiert, das die Ausführung der Bankettfunktion beeinflussende Steuersignal ausgegeben wird.

8. Verfahren nach einem Anspruch 7,
**dadurch gekennzeichnet, dass**
das Kollisionsvermeidungssystem (42) abhängig von der ermittelten prognostizierten Zeit bis zur Kollision verschiedene Warnstufen aufweist, wobei das die Ausführung der Bankettfunktion beeinflussende Steuersignal ausgegeben wird, sobald eine der verschiedenen Warnstufen durch das Kollisionsvermeidungssystem (42) aktiviert wird.

9. Verfahren nach einem der vorhergehenden Ansprüchen,
**dadurch gekennzeichnet, dass**
das Kraftfahrzeug (10) ein drittes Assistenzsystems aufweist, welches ein Rechnergestütztes Umfeldmodell (48) in Abhängigkeit von durch die zumindest eine Erfassungseinrichtung (14) bereitgestellten Sensordaten, in Abhängigkeit von Positionsdaten( 52) des Kraftfahrzeugs (10), in Abhängigkeit von einer gespeicherten digitalen Straßenkarte (50) und insbesondere in Abhängigkeit von zumindest einer über eine Car-to-X-Kommunikation (54, 56, 58) bereitgestellten Information erstellt, wobei das Hindernis (42) gemäß dem dritten Kriterium in Abhängigkeit von dem Rechner gestützten Umfeldmodell (48) detektiert wird.

10. Assistenzsystems (12) für ein Kraftfahrzeugs (10) zum Bereitstellen einer Bankettfunktion, wobei das Assistenzsystem (12) zumindest eine Erfassungseinrichtung (14) aufweist, die dazu ausgelegt ist, eine Bankettfahrt des Kraftfahrzeugs (10) auf einem Straßenbankett (32) gemäß zumindest einem vorbestimmten ersten Kriterium zu erfassen und gemäß einem zweiten Kriterium ein bestimmtes Lenkverhalten eines Fahrers des Kraftfahrzeugs (10) zu erfassen, wobei das Assistenzsystem (12) eine Steuereinrichtung (30) aufweist, die dazu ausgelegt ist, zumindest unter der ersten Bedingung, dass mittels der zumindest einen Erfassungseinrichtung (14) eine Bankettfahrt des Kraftfahrzeugs (10) gemäß dem zumindest einen vorbestimmten ersten Kriterium erfasst wurde, und unter der zweiten Bedingung, dass das bestimmte Lenkverhalten des Fahrers des Kraftfahrzeugs (10) gemäß dem zweiten Kriterium erfasst wurde, eine Ausführung einer Bankettfunktion auszulösen, gemäß welcher ein automatischer Fahreingriff durchgeführt wird,
**dadurch gekennzeichnet, dass**
die Steuereinrichtung dazu ausgelegt ist, zumindest unter der dritten Bedingung, dass mittels der zumindest einen Erfassungseinrichtung (14) ein dem Kraftfahrzeug (10) in Fahrtrichtung vorausliegendes Hindernis (42) gemäß einem vorgegebenen dritten detektiert wird, ein die Ausführung der Bankettfunktion beeinflussendes Steuersignal auszugeben.

## Claims

1. Method for operating a first assistance system (12) of a motor vehicle (10) for providing a hard shoulder function, wherein, at least under the first condition that hard-shoulder driving of the motor vehicle (10) on a road hard shoulder (32) is detected by means of at least one detection device (14) in accordance with at least one predetermined first criterion and, under the second condition that a steering behaviour of a driver of the motor vehicle (10), determined in accordance with a second criterion, is detected, a hard shoulder function is executed, according to which an automatic driving intervention is carried out,
**characterized in that**,
at least under the third condition that an obstacle (42) located in front of the motor vehicle (10) in the direction of travel is detected by means of the at least one detection device (14) in accordance with a predefined third criterion, a control signal influencing the execution of the hard shoulder function is output.

2. Method according to Claim 1,
**characterized in that**
the control signal influencing the execution of the hard shoulder function influences the execution in such a way that the execution is prevented or is aborted or that the automatic driving intervention is executed with an intensity that is reduced in a predetermined manner.

3. Method according to one of the preceding claims,
**characterized in that**
the automatic driving intervention is carried out in the form of automatic wheel-selective braking, during which a specific braking force is applied to the wheels (22, 24) of the motor vehicle (10) which are closer to the road hard shoulder (32).

4. Method according to one of the preceding claims,
**characterized in that**
the predetermined first criterion, according to which the hard-shoulder driving is detected, comprises the fact that sensor data provided by wheel rotational speed sensors (26) of respective wheels (22, 24) of the motor vehicle (10) have a characteristic time profile, in particular in such a way that the time profile of the sensor data of at least one wheel (22, 24) on a first side of the motor vehicle (10), based on a vehicle longitudinal axis (L), varies more highly than the time profile of at least one wheel (24, 22) on a second side of the motor vehicle (10) opposite to the first side, based on the vehicle longitudinal axis (L), and/or wherein the predetermined first criterion, according to which the hard-shoulder driving is detected, comprises the fact that the at least one detection device (14) detects a predetermined relative position of the motor vehicle (10) with respect to a lane marking (36) and/or a road boundary (38), and/or wherein the predetermined second criterion, according to which the determined steering behaviour of a driver of the motor vehicle (10) is detected, comprises the fact that a detected steering angle and/or a steering angle gradient is greater than a predetermined limiting value.

5. Method according to one of the preceding claims,
**characterized in that**
the predefined third criterion comprises the fact that the obstacle (42) located in front of the motor vehicle (10) in the direction of travel is located in a same lane (44) as the motor vehicle (10).

6. Method according to one of the preceding claims,
**characterized in that**
the predefined third criterion comprises the fact that a determined predicted time until the collision with the obstacle (42) falls below a predefinable value.

7. Method according to one of the preceding claims,
**characterized in that**
the motor vehicle (10) has a second assistance system (42), different from the first, which constitutes a collision avoidance system (42) which is designed to detect the obstacle (42) located in front of the motor vehicle (10) in accordance with the predefined third criterion, wherein, for the case in which the collision avoidance system (42) detects the obstacle (42), the control signal influencing the execution of the hard shoulder function is output.

8. Method according to Claim 7,
**characterized in that**
the collision avoidance system (42) has various warning stages depending on the determined predicted time until the collision, wherein the control signal influencing the execution of the hard shoulder function is output as soon as one of the various warning stages is activated by the collision avoidance system (42).

9. Method according to one of the preceding claims,
**characterized in that**
the motor vehicle (10) has a third assistance system, which creates a computer-aided environment model (48) as a function of sensor data provided by the at least one detection device (14), as a function of position data (52) of the motor vehicle (10), as a function of a stored digital roadmap (50) and in particular as a function of at least one item of information provided via Car-to-X communication (54, 56, 58), wherein the obstacle (42) is detected in accordance with the third criterion on the basis of the computer-aided environment model (48).

10. Assistance system (12) for a motor vehicle (10) for providing a hard shoulder function, wherein the assistance system (12) has at least one detection device (14), which is designed to detect hard-shoulder driving of the motor vehicle (10) on a road hard shoulder (32) in accordance with at least one predetermined first criterion, and to detect a specific steering behaviour of a driver of the motor vehicle (10) in accordance with a second criterion, wherein the assistance system (12) has a control device (30) which is designed, at least under the first condition that hard-shoulder driving of the motor vehicle (10) has been detected by means of the at least one detection device (14) in accordance with the at least one predetermined first criterion, and under the second condition that the determined steering behaviour of the driver of the motor vehicle (10) has been detected in accordance with the second criterion, to trigger an execution of a hard shoulder function, according to which an automatic driving intervention is carried out,
**characterized in that**
the control device is designed, at least under the third condition that an obstacle (42) located in front of the motor vehicle (10) in the direction of travel is detected by means of the at least one detection device (14) in accordance with a predefined third, to output a control signal influencing the execution of the hard shoulder function.

## Revendications

1. Procédé pour faire fonctionner un premier système d'assistance (12) d'un véhicule à moteur (10) destiné à mettre à disposition une fonction d'accotement, une fonction d'accotement, selon laquelle une intervention automatique dans la conduite est effectuée, étant exécutée à la première condition qu'une conduite sur l'accotement du véhicule à moteur (10) sur un accotement de route (32) est détectée selon au moins un premier critère prédéterminé au moyen d'au moins un dispositif de détection (14) et à la deuxième condition qu'un comportement de direction d'un conducteur du véhicule à moteur (10) est détecté selon un deuxième critère,
**caractérisé en ce que**
un signal de commande qui influence l'exécution de la fonction d'accotement est délivré au moins à la troisième condition qu'un obstacle (42) se trouvant à l'avant dans le sens de déplacement du véhicule à moteur (10) est détecté au moyen de l'au moins un dispositif de détection (14) selon un troisième critère prédéfini.

2. Procédé selon la revendication 1, **caractérisé en ce que** le signal de commande qui influence l'exécution de la fonction d'accotement influence l'exécution de telle sorte que l'exécution est empêchée ou interrompue ou que l'intervention automatique dans la conduite est effectuée avec une intensité réduite prédéterminée.

3. Procédé selon l'une des revendications précédentes, **caractérisé en ce que** l'intervention automatique dans la conduite est réalisée sous la forme d'un freinage automatique sélectif par roue, lors duquel les roues (22, 24) du véhicule à moteur (10) qui sont les plus proches de l'accotement de route (32) sont soumises à une force de freinage déterminée.

4. Procédé selon l'une des revendications précédentes, **caractérisé en ce que** le premier critère prédéterminé, selon lequel la conduite sur l'accotement est détectée, comprend que les données de capteur fournies par des capteurs de vitesse de rotation (26) des roues (22, 24) respectives du véhicule à moteur (10) présentent une évolution dans le temps caractéristique, notamment de sorte que l'évolution dans le temps des données de capteur d'au moins une roue (22, 24) sur un premier côté du véhicule à moteur (10) par rapport à un axe longitudinal de véhicule (L) varie plus fortement que l'évolution dans le temps d'au moins une roue (24, 22) sur un deuxième côté, à l'opposé du premier côté, du véhicule à moteur (10) par rapport à l'axe longitudinal de véhicule (L), et/ou le premier critère prédéterminé, selon lequel la conduite sur l'accotement est détectée, comprenant que l'au moins un dispositif de détection (14) détecte une position relative prédéterminée du véhicule à moteur (10) par rapport à un marquage de voie de circulation (36) et/ou une délimitation de la chaussée (38), et/ou le deuxième critère prédéterminé, selon lequel le comportement de direction d'un conducteur du véhicule à moteur (10) est détecté, comprend qu'un angle de braquage et/ou un gradient d'angle de braquage détecté est supérieur à une valeur limite prédéterminée.

5. Procédé selon l'une des revendications précédentes, **caractérisé en ce que** le troisième critère prédéfini comprend que l'obstacle (42) se trouvant à l'avant dans le sens de déplacement du véhicule à moteur (10) se trouve sur la même voie de circulation (44) que le véhicule à moteur (10).

6. Procédé selon l'une des revendications précédentes, **caractérisé en ce que** le troisième critère prédéterminé comprend qu'un temps pronostiqué identifié jusqu'à une collision avec l'obstacle (42) devient inférieur à une valeur pouvant être prédéfinie.

7. Procédé selon l'une des revendications précédentes, **caractérisé en ce que** le véhicule à moteur (10) possède un deuxième système d'assistance (42) différent du premier, lequel représente un système d'évitement de collision (42) qui est conçu pour détecter l'obstacle (42) se trouvant à l'avant du véhicule à moteur (10) conformément au troisième critère prédéfini, le signal de commande qui influence l'exécution de la fonction d'accotement étant délivré dans le cas où le système d'évitement de collision (42) détecte l'obstacle (42).

8. Procédé selon la revendication 7, **caractérisé en ce que** le système d'évitement de collision (42) possède différents niveaux d'alerte en fonction du temps pronostiqué identifié jusqu'à la collision, le signal de commande qui influence l'exécution de la fonction d'accotement étant délivré dès que l'un des différents niveaux d'alerte est activé par le système d'évitement de collision (42).

9. Procédé selon l'une des revendications précédentes, **caractérisé en ce que** le véhicule à moteur (10) possède un troisième système d'assistance, lequel crée un modèle d'environnement (48) assisté par ordinateur en fonction des données de capteur fournies par l'au moins un dispositif de détection (14), en fonction de données de position ( 52) du véhicule à moteur (10), en fonction d'une carte routière numérique (50) mémorisée et notamment en fonction d'une information fournie par le biais d'une communication de véhicule avec tout (54, 56, 58), l'obstacle (42) étant détecté selon le troisième critère en fonction du modèle d'environnement (48) assisté par ordinateur.

10. Système d'assistance (12) d'un véhicule à moteur (10) destiné à mettre à disposition une fonction d'accotement, le système d'assistance (12) possédant au moins un dispositif de détection (14) qui est conçu pour détecter une conduite sur l'accotement du véhicule à moteur (10) sur un accotement de route (32) selon au moins un premier critère prédéterminé et pour détecter un comportement de direction déterminé d'un conducteur du véhicule à moteur (10) selon un deuxième critère, le système d'assistance (12) possédant un dispositif de commande (30) qui est conçu pour déclencher une exécution d'une fonction d'accotement, selon laquelle une intervention automatique dans la conduite est effectuée, au moins à la première condition qu'une conduite sur l'accotement du véhicule à moteur (10) a été détectée selon l'au moins un premier critère prédéterminé au moyen de l'au moins un dispositif de détection (14) et à la deuxième condition qu'un comportement de direction déterminé du conducteur du véhicule à moteur (10) a été détecté selon le deuxième critère,
**caractérisé en ce que**
le dispositif de commande est conçu pour délivrer un signal de commande qui influence l'exécution de la fonction d'accotement au moins à la troisième condition qu'un obstacle (42) se trouvant à l'avant dans le sens de déplacement du véhicule à moteur (10) est détecté au moyen de l'au moins un dispositif de détection (14) selon un troisième prédéfini.
